# EUROPEAN PATENT SPECIFICATION

(11) **EP 3 894 104 B1**
(45) Date of publication and mention of the grant of the patent: **28.01.2026**
(21) Application number: 19897147.5
(22) Date of filing: 06.12.2019
(51) Int. Cl.: B21D 22/20, B21D 22/24, B65D 1/26

(54) **TAPERED METAL CUP AND METHOD OF FORMING THE SAME**
KONISCHER METALLBECHER UND VERFAHREN ZUR FORMUNG DAVON
COUPELLE MÉTALLIQUE ÉVASÉE ET SON PROCÉDÉ DE FORMATION

(30) Priority: 10.12.2018 US 201816214477
(43) Date of publication of application: 20.10.2021
(73) Proprietor: Ball Corporation, Westminster, CO 80021 (US)
(72) Inventor: SCOTT, Anthony, J., Westminster, Colorado 80234 (US)
(74) Representative: Eisenführ Speiser
(86) International application number: PCT/US2019/064905
(87) International publication number: WO 2020/123291

(56) References cited:
- US-A- 4 134 354
- US-A1- 2005 061 821
- US-A1- 2005 189 361
- US-A1- 2012 282 482
- US-A1- 2015 289 691
- US-A1- 2018 221 936
- US-A1- 2019 112 100

## Description

This application claims priority to and the benefit of U.S. Non-Provisional Patent Application Serial No. 16/214,477, which is a Continuation-in-Part of and claims the benefit of priority from U.S. Patent Application Serial No. 15/811,032, filed November 13, 2017, and claims the benefit of priority from U.S. Provisional Patent Application Serial No. 62/455,697, filed February 7, 2017.

### FIELD

The present disclosure relates generally to metal cups and methods of forming the same. More specifically, the present disclosure relates to beverage cups formed from a metal. Various embodiments of the present disclosure provide for a thin-walled beverage cup that is stackable with cups of similar construction.

### BACKGROUND

Existing disposable beverage cups and drinking containers typically comprise a plastic material. Plastic cups are manufactured from injection molding or thermoforming operations, whereby many lightweight and disposable cups may be formed. Existing metallic beverage containers generally comprise drinking cans including an end closure secured to the upper end of a filled can.

U.S. Patent 4,366,696 to Durgin et al., discloses a nestable can and method of forming the same from a blank. Durgin et al., however, fail to disclose various features of the present disclosure including, for example, a tapered or stepped geometry as shown and described herein and methods of forming the same.

U.S. Patent 4,914,937 to Bulso et al., discloses a method of forming a tapered container. Bulso et al. provide a straight-walled cup and a method of forming the same, but is devoid of various teachings of the present disclosure.

U.S. Patent 6,463,776 to Enoki et al., discloses a manufacturing method for bottle-shaped cans with a neck and shoulder portion. Enoki et al. fail to disclose various features and methods of the present disclosure. For example, Enoki et al. fail to provide a cup-shaped container with tapered, straight sidewalls.

US 2018/221936 A1 describes a metal cup and a method of forming the same. The disclosed metal cup comprises a plurality of thin, straight-walled sections and a tapered profile. A domed portion is provided in the bottom of the cup. The cup may comprise a disposable cup, a reusable cup, or a recyclable cup.

US 2005/189361 A1 describes a cup that may include a base having a generally circular perimeter, and a sidewall that extends upwardly from the base and defines an open end of the cup. The sidewall may include a lower wall portion having a relatively small diameter, an upper wall portion having a relatively large diameter, and a transition portion extending between the upper wall portion and the lower wall portion. Methods and apparatus for making such cups are also disclosed.

### SUMMARY

Accordingly, there has been a long-felt and unmet need to provide a metal cup that is reusable and recyclable. There has also been a need to provide a tapered metal cup that is stackable to enhance shipping and storing of a plurality of cups.

According to the invention, these needs are met by a method of forming a stackable tapered metallic cup according to claim 1 and a tapered metallic cup according to claim 7.

The Summary of the Invention is neither intended nor should it be construed as being representative of the full extent and scope of the present disclosure. The present disclosure is set forth in various levels of detail in the Summary as well as in the attached drawings and the Detailed Description and no limitation as to the scope of the present disclosure is intended by either the inclusion or non-inclusion of elements, components, etc. in this Summary. Additional aspects of the present disclosure will become more readily apparent from the Detailed Description, particularly when taken together with the drawings.

### BRIEF DESCRIPTION OF THE DRAWINGS

Those of skill in the art will recognize that the following description is merely illustrative of the principles of the disclosure, which may be applied in various ways to provide many different alternative embodiments. This description is made for illustrating the general principles of the teachings of this disclosure and is not meant to limit the inventive concepts disclosed herein.

The accompanying drawings, which are incorporated in and constitute a part of the specification, illustrate embodiments of the disclosure and together with the general description of the disclosure given above and the detailed description of the drawings given below, serve to explain the principles of the disclosure.

It should be understood that the drawings are not necessarily to scale. In certain instances, details that are not necessary for an understanding of the disclosure or that render other details difficult to perceive may have been omitted. It should be understood, of course, that the disclosure is not necessarily limited to the particular embodiments illustrated herein.
Fig. 1 is a front elevation view of a container body in one stage of formation.
Fig. 2 is a front elevation view of a container body in one stage of formation.
Fig. 3 is a front elevation view of a metal container.
Fig. 4 is a front elevation view of a stackable metal container.
Fig. 5 is a cross-sectional elevation view of the container according to Fig. 4 and taken at section A-A.
Fig. 6 is a top plan view of the container according to Fig. 4
Fig. 7 is a detailed elevation view of a portion of multiple containers stacked.
Fig. 8 is a detailed elevation view of a portion of a container.
Fig. 9 is a detailed elevation view of a portion of a container in accordance with Fig. 4.
Fig. 10 is a flow chart depicting a method of forming a metal cup according to one embodiment of the present disclosure.
Fig. 11 is a flow chart depicting a method of forming a metal cup according to one embodiment of the present disclosure.
Fig. 12 is a flow chart depicting a method of forming a metal cup according to one embodiment of the present disclosure.
Fig. 13 is a flow chart depicting a method of forming a metal cup according to one embodiment of the present disclosure.
Fig. 14 is a flow chart depicting a method of forming a metal cup.
Fig. 15A is a cross-sectional elevation view of a cup.
Fig. 15B is a detailed view of the lower portion of the cup of Fig. 15A.
Fig. 16A is a cross-sectional elevation view of a cup according to an embodiment of the present disclosure.
Fig. 16B is a detailed view of the lower portion of the cup of Fig. 16A.
Fig. 17 is a cross-sectional view of a plurality of cups provided in a stacked or nested arrangement.
Fig. 18 is a cross-sectional view of tooling components according to one embodiment of the present disclosure.
Fig. 19 is a cross-sectional view of the tooling components of the embodiment of Fig. 18.

### DETAILED DESCRIPTION

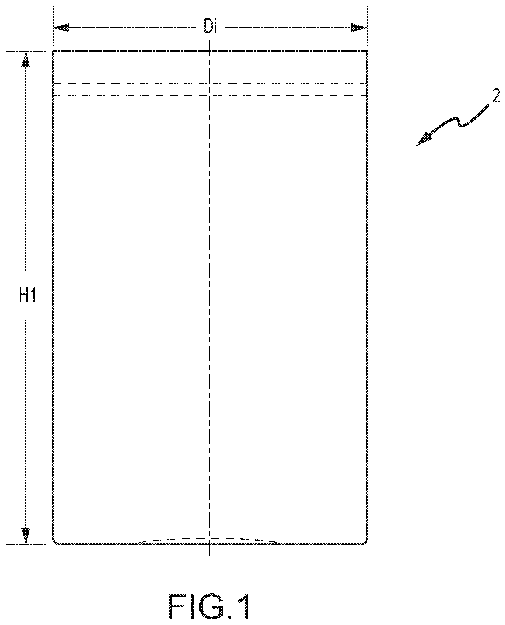

Fig. 1 is a front elevation view of a straight-walled preform 2. The preform 2 represents an initial forming stage of a metal cup.

The straight-walled preform 2 is preferably formed by feeding a quantity of metal (e.g. aluminum) into a cupping press and forming a preliminary drawn cup from a blank sheet cut from a coil of metal material. The resulting straight-walled drawn cup preferably comprises a constant wall thickness that is approximately equal to the incoming gauge of the metal fed into the cupping press. The preliminary drawn cup is then fed into a bodymaker wherein the metal is ironed. The resultant straight-walled preform 2 comprises a sidewall where the base comprises a thickness approximately equal to an incoming gauge of metal, and the sidewall may comprise a thin-wall portion and a thick-wall portion. In some preforms 2, the thin-wall portion is not provided. The straight-walled preform 2 comprises an initial diameter Di that generally corresponds to and is approximately equal to the diameter of the punch that forms the cup. In various preforms, the initial diameter Di is between approximately 5,08 cm (2.0 inches) and 15,24 cm (6.0 inches). Preferably, the initial diameter Di is between approximately7,62 (3.0) and 10,16 cm (4.0 inches), and more preferably is of approximately 8,3566 cm (3.290 inches).

The straight-walled preform 2 comprises a height H1 of between approximately 7,62 (3.0) and 25,4 cm (10.0 inches). Preferably, the preform 2 comprises a height H1 of between approximately 8,89 (3.5) and 13,97 cm (5.5 inches), and more preferably of approximately 11,33602 cm (4.463 inches). A bottom portion of the preform comprises a radius of curvature resulting from the shape and contact of the punch used to form the cup. In various preforms, this radius R is between approximately 0,0635 cm (0.025 inches) and 0,635 cm (0.250 inches), and preferably of approximately 0,14986 cm (0.059 inches).

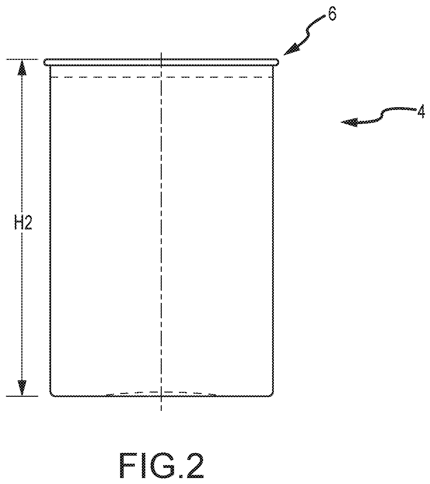

Fig. 2 is a front elevation view of a curled preform cup 4 in a further phase of the formation. The curled preform 4 of Fig. 2 comprises the thin-walled preform 2 of Fig. 1, and wherein a curl 6 is provided on the upper edge or lip of the cup. The curl 6 is provided to eliminate a sharp edge, provide added rigidity, and provide a means for removal from draw tooling. As shown in Fig. 2, the curled preform cup 4 comprises a reduced height as compared to the preform 2 of Fig. 1. Specifically, the curled preform cup 4 of Fig. 2 comprises a height H2 of between approximately 11,43 (4.5) and 13,97 cm (5.5 inches), and preferably of approximately 12,56538 cm (4.947 inches).

Prior to or subsequent to the forming of the curl 6, the preform 4 may be washed, coated, and/or decorated. It is contemplated that at least one of the inside and the outside of the preform is coated with epoxy resin and/or other materials that will be recognized by one of ordinary skill in the art. The cup is coated to protect the aluminum from oxidization and to prevent corrosion of the aluminum from the cup contents. It is further contemplated that an inside and/or outside of the cup is provided with paint or other ornamental treatment.

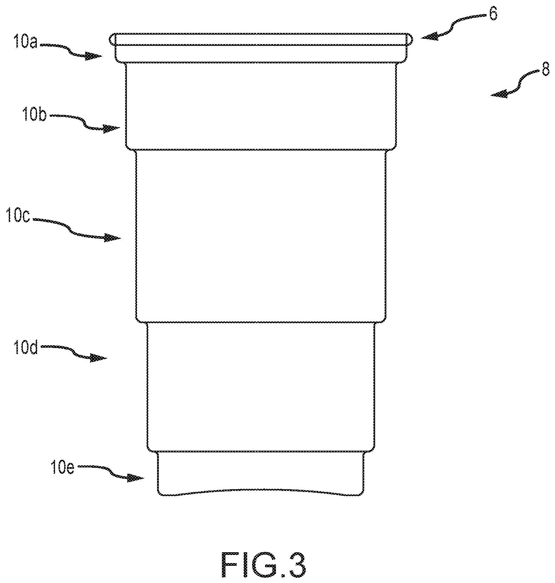

Fig. 3 is a front elevation view of a straight drawn cup 8 formed from the curled preform cup 4 of Fig. 2. As shown, the straight drawn cup 8 comprises a curl 6 at an upper end or lip of the cup.

The straight drawn cup 8 further comprises a plurality of sections 10a, 10b, 10c, 10d, 10e wherein the sections each comprise straight-wall sections of successively smaller diameter and varying height, as shown in Fig. 3. Fig. 3, as well other Figures of the present disclosure, are provided with dimensions. These dimensions are provided by way of example only.

The straight drawn cup 8 of Fig. 3 comprises an intermediate phase of the forming process of a cup of the present disclosure.

As shown in Fig. 3, the straight drawn cup 8 comprises a plurality of sections 10, wherein each of the sections 10 comprise a successively smaller diameter from an upper end to a lower end of the straight drawn cup 8, wherein the uppermost section 10a comprises the largest diameter, and the lowermost section 10e comprises the smallest diameter. The sections comprise varying heights, wherein the relative heights can be characterized as: 10c > 10d > 10b > 10e > 10a. As shown in Fig. 3, the straight drawn cup 8 comprises five sections and four ribs. The number of sections and ribs may vary depending on consumer requirements. The section heights may also vary depending on consumer requirements.

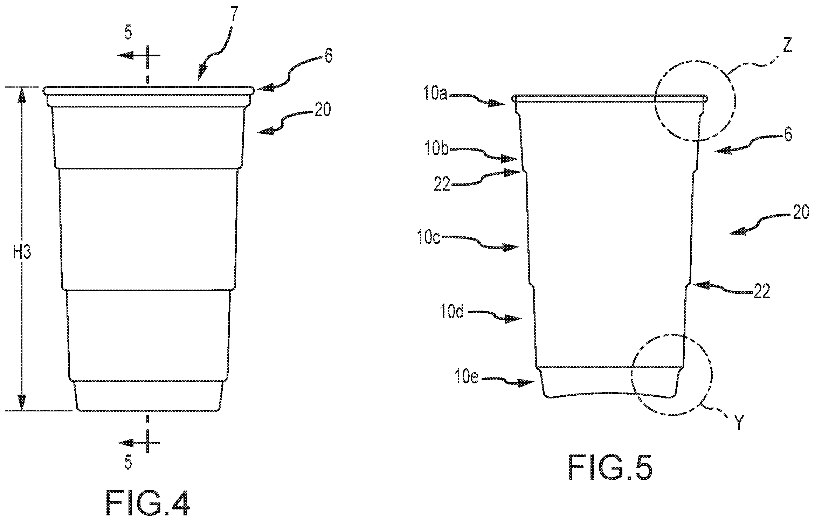

Figs. 4-5 illustrate a finished tapered metallic tapered cup 20. The tapered cup 20 is preferably formed from the straight drawn cup 8 of Fig. 3 by expanding each of the straight walled sections 10 to a larger diameter (as compared to that shown in Fig. 3) using a die (not shown) with a tapered profile.

As further shown in Fig. 4, the finished tapered cup 20 is expanded to a final height H3 that is greater than H2. Specifically, the finished tapered cup 20 comprises a height H3 that is between approximately 11,43 (4.5) and 16,51 cm (6.50 inches), and preferably of approximately 13,5382 cm (5.330 inches). The final height H3 is produced by an expansion die during a final forming process. An opening 7 is provided at the upper end of the tapered cup 20, wherein the opening is devoid of a closure, a seal, etc. The opening is at least partially defined by the circumference of the curled portion 6, and wherein the curled portion 6 comprises at least a portion of a user-interface wherein a user's mouth is intended to contact the curled portion 6 during drinking.

Fig. 5 is a cross-sectional elevation view of the tapered metallic tapered cup 20 as shown in Fig. 4, and wherein the cross-section is taken at line A-A of Fig. 4. As shown in Fig. 5, the tapered cup 20 comprises a tapered profile comprising multiple stepped sections 10a, 10b, 10c, 10d, 10e, wherein each successive section comprises a smaller diameter by way of a step 22. Additionally, each section comprises an angled or tapered sidewall formed by a tapered expansion die.

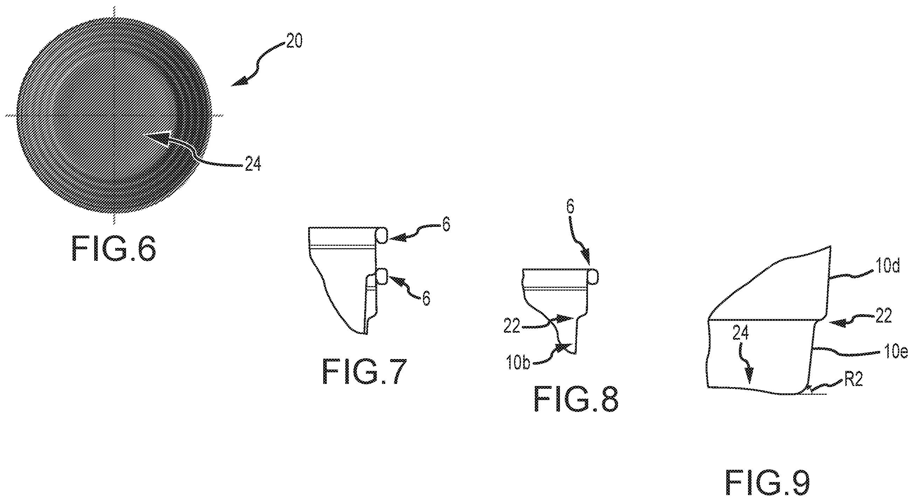

Various internal diameters of a plurality of sections 10 are provided. Preferably, a finished tapered cup 20 comprises a plurality of sections 10 comprising relative diameters characterized as: 10a > 10b > 10c > 10d > 10e. Specific diameters are provided and illustrated as being measured from an upper portion of each respective section 10. The plurality of sections 10 comprise varying heights, wherein the relative heights can be characterized as: 10c > 10d > 10b > 10e > 10a. An internal diameter of a curled section 6, which also comprises a drinking interface, comprises a diameter of between approximately 5,08 (2.0) and 12,7 cm (5.0 inches), and preferably of approximately 8,3566 cm (3.290 inches). Details Y and Z are indicated on Fig. 5, and are shown in detail in Figs. 9 and 8, respectively. Various expansion angles are illustrated in Fig. 5, wherein each section 10 expands outwardly along a height of the section 10. As shown, each section 10 comprises a different expansion angle (expressed as a percentage of the diameter over the height of the section). Alternatively, however, it is contemplated that each section 10 comprises the same expansion angle. The relative expansion angles can be expressed as: 10e > 10b > 10d > 10c. The uppermost section 10a provided in Fig. 5 comprises a straight-walled section that is devoid of an expansion angle.

The straight wall sections of Fig. 5 are contemplated as being formed by drawing the cup and providing an expansion or increased diameter to each of the sections. In some cups, it is contemplated that each of the sections is formed using a draw and, subsequent to the initial formation of each of the drawn sections, one or more expansion dies are provided to expand each of the sections. In other cups, it is contemplated that the drawing and expanding of the straight wall sections are performed in an alternating manner wherein a first section is drawn and then expanded, a second section is then drawn and expanded, etc. It is also contemplated that the number of draw and expansion operations need not be equal. For example, multiple expansion steps may be provided on a portion formed from a single draw operation. Additionally, a section may be drawn and not provided with a corresponding expansion operation.

Fig. 6 is a top plan view of a finished tapered cup 20 according to Fig. 4. Multiple stepped sections 10 are shown in plan view, and a bottom of the tapered cup 20 may comprise a dome 24.

Fig. 7 is a detailed view of two finished tapered cups 20 provided in a stacked arrangement, and wherein respective curled portions 6 of each tapered cup 20 are provided with a separation or stand-off height. A stand-off height is provided that comprises a height or distance between successive upper ends of the curled portions 6. The stand-off height is between approximately 0 cm (0.00 inches) and approximately 2,54 cm (1.0 inches). Preferably, the stand-off height is approximately 0,7112 cm (0.28 inches). The stand-off height provides a user with the ability to grasp and separate stacked cups, for example.

A stand-off feature is not required and alternative examples contemplate that such a stand-off is not provided.

Fig. 8 is a detailed cross-sectional elevation view of a finished tapered cup 20 showing the upper portion of the cup including the curl 6. Fig. 8 is a detailed view of detail Z of Fig. 5. As shown in Fig. 8, a curled portion 6 of the cup comprises a radius of curvature of between approximately 0,0254 cm (0.010 inches) and 0,635 cm (0.250 inches). A preferred radius of curvature comprises a curvature of approximately 0,1016 cm (0.040 inches). Fig. 8 also provides a step 22 between adjacent sections 10a, 10b of a tapered cup 20. As shown, the step comprises a first radius of curvature of approximately 0,1016 cm (0.040 inches) and a second radius of approximately 0,1016 cm (0.040 inches), wherein the two radii of curvature each comprise a transition or departure from an adjacent sidewall of the sections 10a, 10b. Although only one step 22 is depicted in Fig. 8, it is contemplated that each step 22 of the tapered cup 20 is provided comprising the same dimensions as the step 22 shown in Fig. 8. The step 22 can be of any dimension or combination of one or more radii.

Fig. 9 is a detailed cross-sectional elevation view of a finished tapered cup 20 showing the bottom portion of the tapered cup 20 comprising a dome 24. Fig. 9 is a detailed view of detail Y of Fig. 5. Fig. 9 includes various dimensions and details of a tapered cup 20. As shown, the tapered cup 20 comprises a dome 24 in a lower portion of the preform 20. A bottom portion 10e of the cup comprises an outer diameter of between approximately 3,81 (1.50) and 8,89 cm (3.50 inches), and preferably of about 5,96646 cm (2.349 inches). A radius of curvature R2 is provided as a transition between the bottom section 10e and the dome, wherein the radius of curvature R2 comprises a radius of between approximately 0,0254 cm (0.010 inches) and approximately 0,635 cm (0.250 inches). Preferably, the radius of curvature is approximately 0,254 cm (0.10 inches). A flat standing surface 30 is provided between the radius R2 and the dome 24, wherein the flat surface 30 comprises a resting or supporting for the finished preform 20. The flat surface 30 generally comprises an annular surface with a width of between approximately 0,00254 cm (0.0010 inches) and 0,3175 cm (0.125 inches), and preferably of approximately 0,21336 cm (0.084 inches). The flat surface 30 extends into a domed section 24 comprising multiple radii of curvature. A central portion of the domed feature 24 comprises a radius of approximately 38,1 cm (15.0 inches), and the domed portion 24 transitions to a flat surface 30 as shown. The domed portion 24 and the dimensions thereof may vary in dimensions. In further examples, a flat standing surface is not provided.

As shown in Fig. 9, a bottom section 10e of the cup comprises a gauge or wall thickness of approximately 0,02286 cm (0.0090 inches), and an adjacent section 10d, comprises a gauge or wall thickness of approximately 0,01016 cm (0.0040 inches). The bottom section 10e comprises a section of enhances gauge and therefore comprises enhanced durability as the bottom section 10e is intended to contact another surface, such as when the cup is placed on a surface, dropped, etc. In certain examples, the cup comprises a single metal thickness.

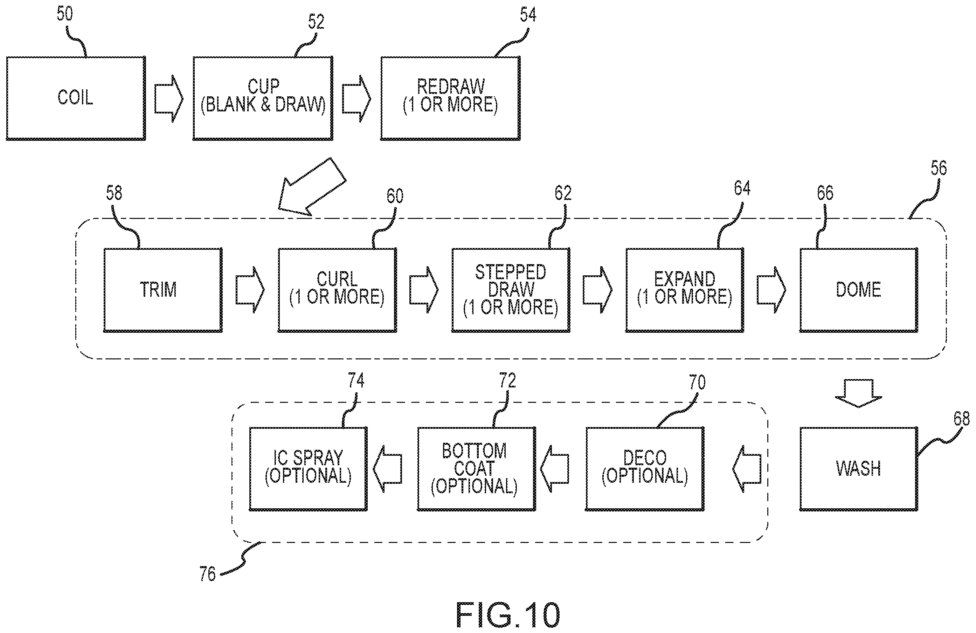

Fig. 10 is a flow chart depicting a method of forming a metal cup according to one embodiment of the present disclosure. As shown, the method of Fig. 10 comprises a first step 50 of providing a coil of metal material from which a cup is to be formed. Preferably, the coil provided in step 50 comprises a coil of aluminum stock material. A second step 52 is provided wherein at least one cup is formed from a blank cut from the coil. The cup is formed using a blank and draw operation. Subsequently, a redraw step 54 is provided wherein the cup is subjected to at least one redraw operation. Method steps 50, 52 and 54 provide an initial cup that is ready for further processing according to methods of the methods of the present disclosure.

The cup provided from the redraw step 54 is further subjected to forming and finishing steps as shown and described herein. In the depicted embodiment of Fig. 10, the cup is subjected to a trimming operation wherein an upper, open end of the cup is cut or trimmed to remove material at step 58. Subsequently, at step 60, the upper trimmed end of the cup is provided with at least one curl (see 6 of Fig. 2, for example). Subsequently, and referring now to step 62, at least one stepped draw operation is performed wherein multiple straight-wall sections are formed in the cup (see Fig. 3, for example). The cup is then expanded via at least one expansion operation in step 64. The expansion step 64 comprises expanding each of the straight wall sections to a larger diameter using one or more dies with a tapered profile. A doming operation 66 is then performed to provide a dome in a bottom portion of the cup. The dome is probably provided to enhance the structural integrity and stability of the cup. The series of steps described herein and referenced as sequence 56 comprise steps that are contemplated as being re-ordered or eliminated depending on design, customer requirement, and/or machine technology. While at least one embodiment contemplates performing the steps as illustrated in Fig. 10, it is also contemplated that one or more of the steps indicated by 56 may be eliminated or re-sequenced.

Subsequent to the sequence illustrated as 56 in Fig. 10, the cup is then subjected to a washing step 68. After washing, the cup is decorated at step 70, provided with a bottom coat at step 72, and/or an internal coating ("IC") spray step 74. The plurality of method steps indicated by 76 in Fig. 10 are contemplated as being re-ordered or eliminated depending on design, customer requirement, and/or machine technology. For example, depending on customer needs and requirement, the method may terminate after a decoration step 70.

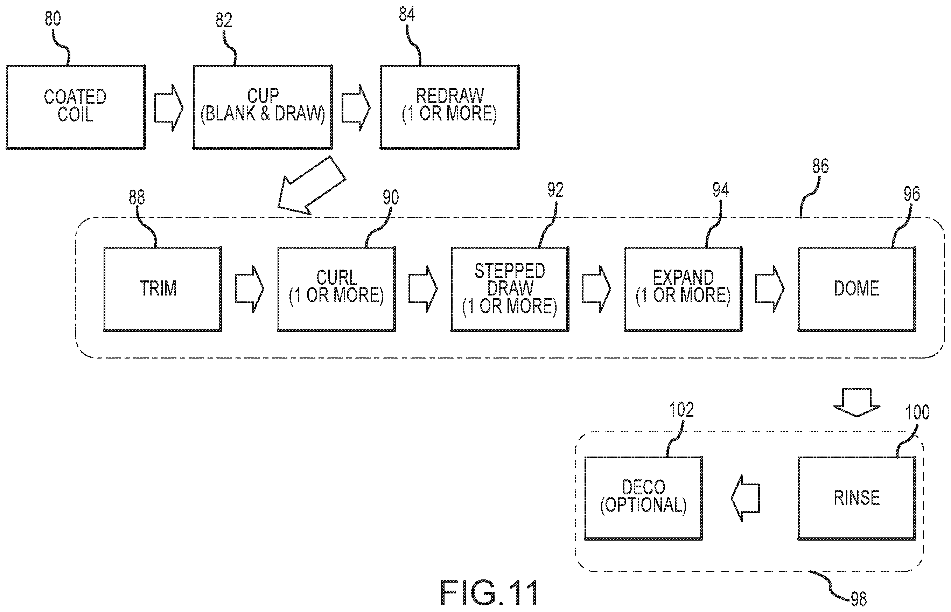

Fig. 11 is a flow chart depicting a method of forming a metal cup according to another embodiment of the present disclosure. As shown, an initial step 80 is provided wherein a coated coil is provided in the form of stock material. Preferably, the coil in step 80 comprises coated aluminum. However, various embodiments of the present disclosure provide and contemplate a "coated" coil that comprises an epoxy, film, polymer or other "paint" cured, laminated or extruded to a surface of the metal using various methods. At least one cup is formed from the coil at step 82, the cup being formed from a blank sheet of material cut from the coil and a draw die. The initial cup formed in step 82 is then subjected to at least one redraw operation in step 84. Having formed an initial cup, the process advances to step 88 where an upper, open portion of the cup is trimmed in step 88, subsequently provided with a curl at step 90, subjected to a stepped redraw operation at step 92 to form at least one straight-walled portion, expanded in diameter at step 94, and provided with a bottom dome through a doming operation at step 96. Steps 88-96 of Fig. 11 are collectively referred to as sequence 86. The steps of this sequence 86 are contemplated as being re-ordered or eliminated depending on design, customer requirements, and/or machinery.

Subsequent to the method steps of the depicted sequence 86, the cup is then subjected to a rinsing or washing operation 100 and a decorating step 102. In Fig. 11, washing and decorating are depicted as a final sequence 98 in which the cup is finished. It is also contemplated, however, that the sequence 98 can be provided subsequent to the redraw step 84 and prior to sequence 86.

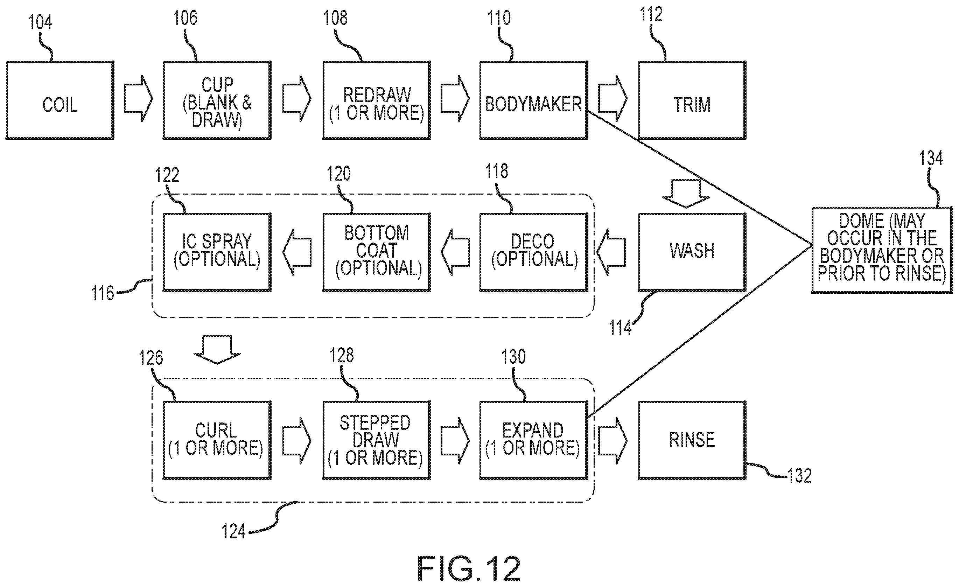

Fig. 12 is a flow chart depicting a method of forming a metal cup according to another embodiment of the present disclosure. As shown in Fig. 12, a plurality of initial cup forming steps are provided wherein a coil 104 is provided. At least one cup is formed from the coil material at step 106, by a blank and draw operation. A redraw step 108 is provided to further form the cup. A bodymaker at step 110 is optionally used to form the final cup height.

An upper portion of the cup is then trimmed at step 112. The trimmed cup is then preferably subjected to a washing operation 114. A decorating and/or coating sequence 116 is provided subsequent to washing, the decorating sequence comprising the steps of decorating the cup at step 118, providing a bottom coat 120, and/or providing an internal coating to the cup at step 122. One or more of the steps of the coating sequence 116 may be reordered, eliminated, and/or moved after a rinsing step 132.

Preferably subsequent to the coating sequence 116, final forming steps 124 are provided. The final forming steps comprise providing a curl to the trimmed portion of the cup at step 126, performing at least one stepped draw operation 128 to form one or more straight walled section in the cup, and performing an expansion step 130 to expand the diameter of the straight walled section(s). The final forming steps 124 are contemplated as being reordered or eliminated depending on user requirements. A rinsing step 132 is provided as a finishing step. However, as previously noted, one or more steps of the coating sequence 116 may be re-ordered such that they occur subsequent to the rinsing step 132. The embodiment of Fig. 12 contemplates providing a dome in a bottom portion of the cup. A doming operation 134 is provided and is contemplated as occurring during the bodymaker operation 110 or prior to rinsing as a final, separate operation.

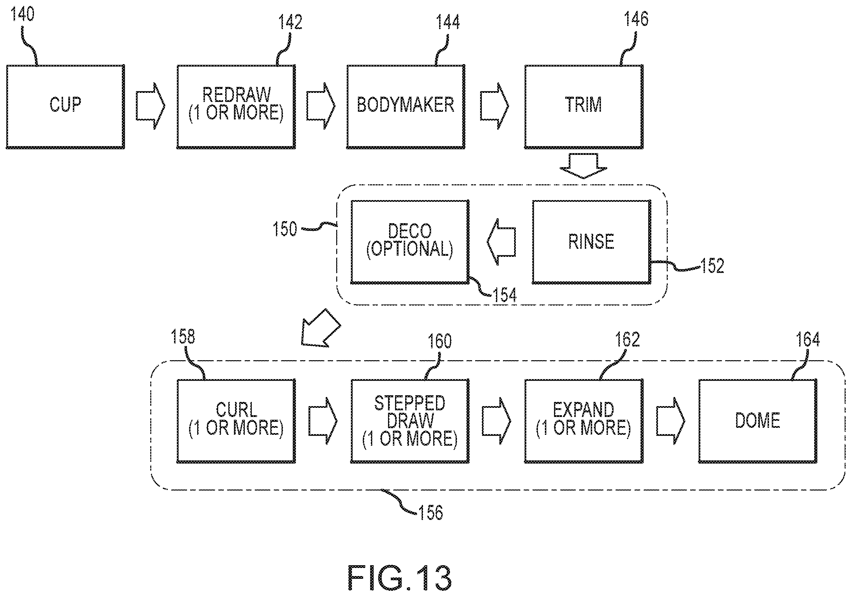

Fig. 13 is a flow chart depicting a method of forming a metal cup according to another embodiment of the present disclosure. As shown in Fig. 13, a cup is provided at step 140 and is preferably formed from a coil of blank aluminum. The cup is then redrawn at step 142, wherein the cup is subjected to one or more redraw operations. The cup is then fed to a bodymaker at step 144 to form a final cup height and diameter. Subsequently, the cup is trimmed at step 146 wherein an excess cup height created from the redrawing and/or bodymaker operation is trimmed. A cleaning and decorating sequence 150 is provided wherein the cup is subjected to at least one of a rinsing step at 152 and a decorating step 154. The steps of the cleaning and decorating sequence 150 may be moved after the expansion 162 or doming step 164 provided in Fig. 13.

The cup is then advanced to finishing sequence 156, wherein the finishing sequence comprises providing a curl to the trimmed portion of the cup at step 158, providing a stepped redraw operation 160, providing an expansion operation 162 and providing a dome in a bottom portion of the cup at step 164. although the doming step 164 is contemplated as occurring a final step in the embodiment of Fig. 13, it is also contemplated that the doming step may occur within the bodymaker at step 144, making the expansion operation 162 the final step of the embodiment of Fig. 13. The steps of the finishing sequence 156 of Fig. 13 may be re-ordered or eliminated depending on design, customer requirement, and/or machine technology.

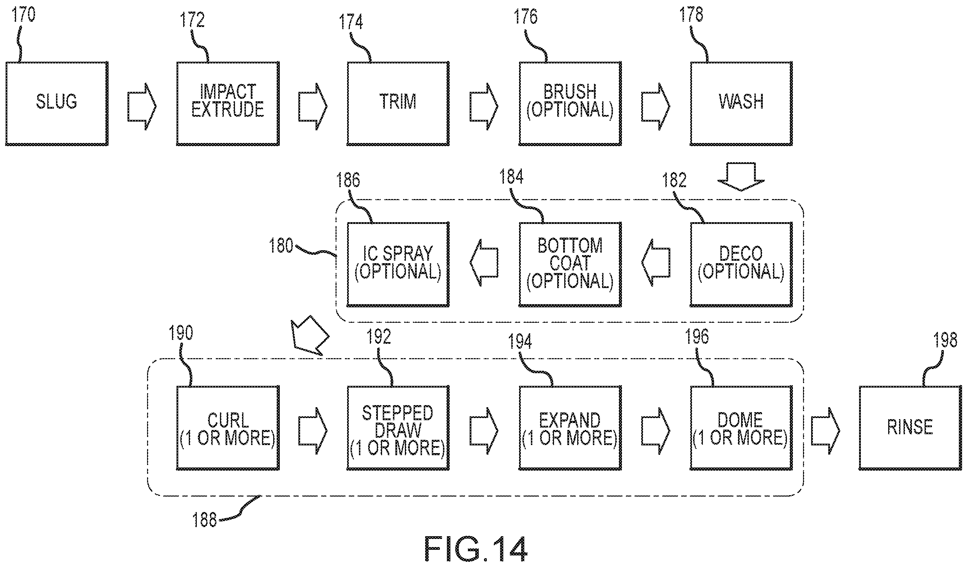

Fig. 14 is a flow chart depicting a method of forming a metal cup. As shown in Fig. 14, a cup is provided from a slug of blank material. As shown, an initial step 170 comprising providing a slug of material (e.g. aluminum). The slug is impact extruded at step 172 to form a cup. An upper end of the cup is trimmed to a preferred height at step 174 and subsequently brushed and washed at step 176 and 178, respectively. In some examples, a step of ironing the impact-extruded cup is provided after impact extrusion (step 172) and prior to trimming (step 174). A washed cup 178 is then provided and subjected to a coating and decorating sequence 180 as shown. The coating and decorating sequence 180 of Fig. 14 comprises the steps of decorating the cup 182, providing a bottom coat to the cup 184 and providing an internal coating (e.g. sprayed coating) to the cup 186. The steps of the coating and decorating sequence 180 may be reordered and/or may be provided subsequent to the rinsing step 198.

After the coating and decorating sequence 180, the method of Fig. 14 proceeds to a finishing sequence 188 that comprises the steps of curling an upper, trimmed portion of the cup at step 190, performing a stepped draw operation 192, providing an expansion operation using one or more expansion dies 194 and forming a dome 196 in a bottom portion of the cup. The steps of the finishing sequence may be re-ordered or eliminated depending on user preference, design, customer requirements, and/or available machine technology. Subsequent to the finishing sequence 188, the cup is washed and/or rinsed at step 198.

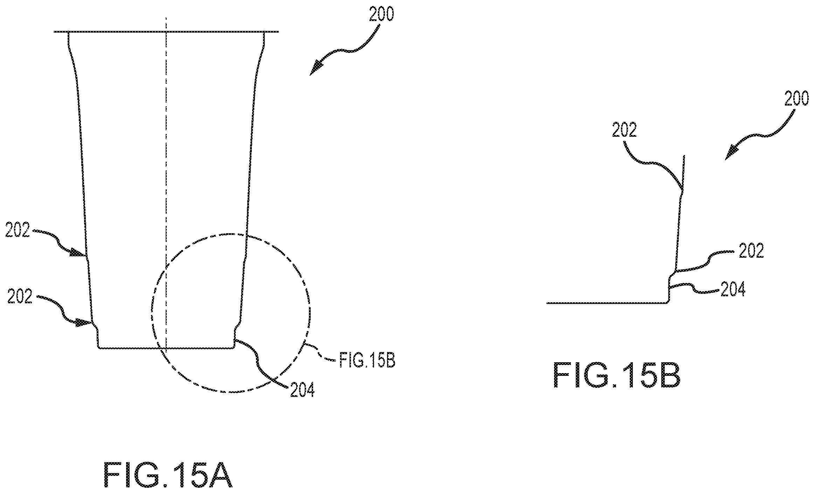

Figs. 15A-15B depict a cup. As shown, the cup 200 comprises a rotationally-symmetrical profile with a plurality of steps or ribs 202. In Figs. 15A-15B, the cup 200 does not comprise an anti-sticking feature.

Accordingly, a plurality of cups of the embodiment of Figs. 15A-15B are capable of being stacked or nested in a compact manner. However, this compact manner including a close contact and nesting between an exterior of a sidewall 204 of the bottom portion of one cup and an interior of a sidewall 204 of a second, adjacent cup can cause adjacent cups to be difficult to separate due to a friction force and/or vacuum force between the two cups. Fig. 15B is a detailed view of the lower portion of the cup of Fig. 15A

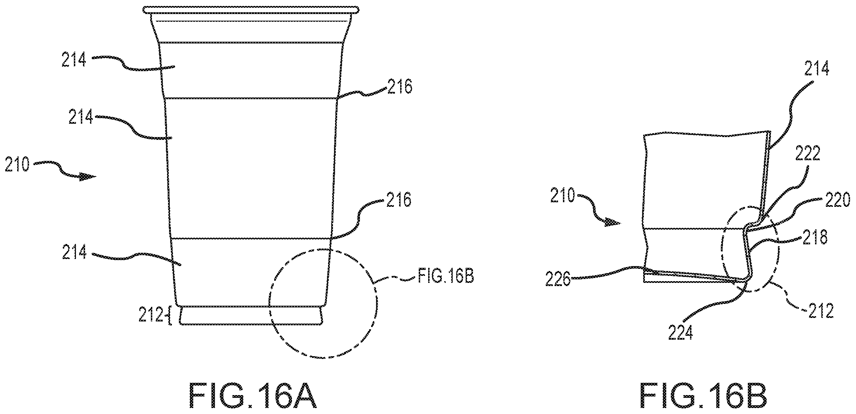

Figs. 16A-16B depict a container 210 according to an embodiment of the present disclosure that comprises a bottom portion 212 having a specific shape and structure to render the separation of stacked, adjacent cups easier for a user. Fig. 16A is an elevation view of the container 210, which comprises a plurality of tapered sections 214 separated by steps or ribs 216. The bottom portion 212 comprises an angled or tapered portion and a base.

Fig. 16B is a cross-sectional elevation view of the container 210 of Fig. 16A. More specifically, the bottom section 212 of the container 210 is enlarged for clarity. As shown, the bottom section 212 comprises a domed portion 226 surrounded by a first radius 224. An inwardly-tapered sidewall 218 extends upwardly to a second radius 220, with a third radius 222 connecting the second radius 220 and a tapered section 214. A straight-walled section is provided between the second and third radii. As shown in Fig. 16B, the first and third radii 224, 222 comprise convex bends, and the second radius 220 comprises a concave bend. Additionally, the inwardly-tapered sidewall 218 comprises a slope or angle that extends inwardly (i.e. toward a central longitudinal axis of the container from bottom to top), as opposed to the tapered sections 214 that comprise an outward slope or angle. Although a straight walled section 218 is shown in Fig. 16B, other embodiments of the present disclosure contemplate that the first radius 224 extends directly into the second radius 220. Various embodiments of the present disclosure contemplate that the second radius 220 is provided closer to a centerline of the cup than the first radius 224 to provide the stand-off feature shown and described herein. The cup comprises multiple inflection points, wherein the dome transitions to a first radius 224, the sidewall 218 transitions to the second radius 220, and the second radius transitions to the third radius 222.

In various embodiments, the first radius 224 comprises a radius of between approximately 0,127 cm (0.050 inches) and 0,508 cm (0.20 inches), and preferably of about 0,254 cm (0.100 inches). In various embodiments, the second radius 220 comprises a radius of between approximately 0,127 cm (0.050 inches) and 0,508 cm (0.20 inches), and preferably of about 0,254 cm (0.100 inches). In various embodiments, the third radius 222 comprises a radius of between approximately 0,0762 cm (0.030 inches) and 0,508 cm (0.20 inches), and preferably of about 0,1524 cm (0.060 inches).

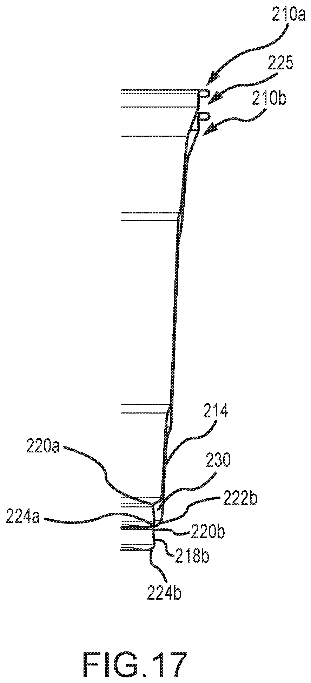

Fig. 17 is a cross-sectional elevation view of a plurality of containers 210a, 210b provided in a stacked arrangement. As shown, the containers 210a, 210b are of similar construction and size and each comprise an anti-sticking feature as shown and described herein (see Figs. 16A-16B, for example). The first radius 224a of a first cup 210a is provided on the interior of the second radius 220b of the second cup 210b. The third radius 222b of the second cup 210b extends outwardly away from the first cup 210a and a void space 230 is created between the two cups 210a, 210b. The void space 230 is provided between the inwardly-tapered portion 218 of the first cup 210a and the outwardly tapered portion 214 of the second cup 210b. Additionally, the structure of the lower portions of the cups 210a, 210b provides for a spacing or stand-off height 225 at the upper ends of the cups wherein the respective curls provided at the upper ends of each of the cups are spaced apart. This allows for a user to grasp and easily separate nested or stacked cups.

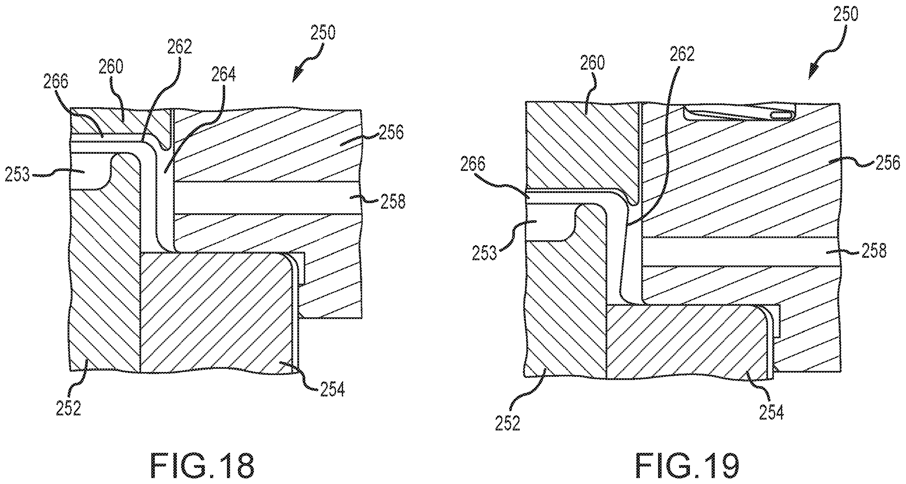

Figs. 18-19 are cross-sectional elevation views of forming tools in accordance with one embodiment of the present disclosure. As shown, a tool pack 250 is provided that comprises a die center punch 252 with a void 253 for receiving a domed bottom portion of a cup. The tooling 250 also comprises a redraw pressure pad 254, a redraw die 256, and a reforming tool 260. A metal cup 262 is shown relative to the forming tools. The redraw die 256 comprises a venting feature 258 to allow air to escape the tool during a forming operation.

Fig. 18 shows the tooling 250 in an initial or starting position of an operation for forming an anti-sticking feature of a cup. As shown in Fig. 18, the cup 262 comprises a tiered or stepped profile, but has not yet been provided with an anti-sticking feature of the present disclosure. The pressure pad 254 and redraw die 256 have been brought into contact and the cup 262 is compressed between the two components. An internal gap 264 is provided to allow for the bottom portion of the cup 262 to move outwardly.

Fig. 19 shows the forming tools 250 and the cup 262 in a forming position. As shown in Fig. 19, the bottom portion of the cup 262 has been provided with an anti-sticking feature. During formation, the reforming tool 260 is moved downwardly (at least as shown in Fig. 19) to contact the bottom portion of the cup 262. A concave void 266 provided in the reforming tool 260 that contacts the bottom portion of the cup 262 exterior to a domed area of the cup 262 and expands the bottom portion. The result is that the cup takes on a shape as shown in Fig. 19 wherein a lowermost portion of the cup 262 is expanded outwardly relative to the remainder of the bottom portion and the cup 262 is provided with an inward taper as is further shown and described in Fig. 16B, for example. The metal of the cup moves outwardly at a bottom portion (corresponding to the first radius 224 of Fig. 16B), and inwardly proximal to the second radius (220 in Fig. 16B). During this movement, dome home is preferred kept constant.

The invention is defined in the appended claims.

## Claims

1. A method of forming a stackable tapered metallic cup (20), the method comprising:
providing a stock material;
cutting a blank from the stock material;
forming at least one cup from the blank using a blank and draw operation;
performing a redrawing operation on the cup to provide the cup with a predetermined height and a wall thickness;
subsequent to the redrawing operation, trimming the cup to a second height;
curling the top edge of the trimmed cup to form a lip;
forming straight wall sections (10) in the cup by drawing the cup;
expanding each of the straight wall sections (10) using one or more dies with a tapered profile;
forming a dome (24) in a bottom of the cup (20); and
forming a stacking feature in the bottom of the cup (20) by providing a compression force on the bottom of cup (20) such that a lower section of the cup (20) comprises an inward taper or slope,
wherein the stacking feature comprises a first radius (224) positioned adjacent a dome (24) on the lower end of the tapered cup (20) with an inwardly tapered sidewall (218) extending upwardly therefrom, a second radius (220), and a third radius (222) with a substantially horizontally oriented step extending between the second (220) and third radius (222);
wherein the first radius (224) and the third radius (222) comprise convex features, and the second radius (220) is provided between the first (224) and third radii (222); and
wherein the first radius (224) of a metallic cup (20) is operable to rest on a second radius (220) of a second metallic cup (20) such that at least one of the upper ends, and the lower ends of the metallic cups (20) are vertically spaced apart when the metallic cups (20) are stacked or nested,
wherein the first radius (224) and the second radius (220) each comprise a radius of between approximately 0,127 cm (0.050 inches) and 0,508 cm (0.20 inches) and
wherein the third radius (222) comprises a radius of between approximately 0,0762 cm (0.030 inches) and 0,508 cm (0.20 inches).

2. The method of claim 1, wherein the stock material comprises an aluminum coil, and the step of forming at least one cup comprises subjecting at least a portion of the aluminum coil to the blank and draw operation.

3. The method of claim 1, further comprising decorating or coating at least one of an interior and an exterior surface of the metallic cup (20).

4. The method of claim 1, wherein the step of curling the top edge occurs prior to the step of forming one or more straight wall sections (218).

5. The method of claim 1, wherein the stock material comprises a pre-coated aluminum sheet, thereby reducing a need for additional washing and coating steps in the formation of the cup.

6. The method of claim 1, wherein forming a stacking feature in the bottom of the cup by providing a compression force on the bottom of cup is performed using a tool pack (250) that comprises a die center punch (252) with a void (253) for receiving a domed bottom portion (24) of a cup and a redraw pressure pad (254), a redraw die (256), and a reforming tool (260), wherein during formation, the reforming tool (260) is moved to contact the bottom portion of the cup (262) wherein a concave void (266) provided in the reforming tool (260) that contacts the bottom portion of the cup (262) exterior to a domed (24) area of the cup (262) and expands the bottom portion.

7. A tapered metallic cup (20) with a geometric profile adapted to allow stacking with a second metallic cup (20), comprising:
an upper end and a lower end, and a height extending between the upper end and the lower end;
a plurality of tapered sections (214) provided between the upper end and the lower end; and
wherein each of the tapered sections (214) comprises a substantially constant wall thickness and a tapered profile;
wherein adjacent tapered sections (214) of the plurality of tapered sections (214) comprise successively smaller diameters; and
the lower end of the cup (20) comprising a stacking feature with a plurality of inflection points, the stacking feature comprising a first radius (224) positioned adjacent a dome (24) on the lower end of the tapered cup (20) with an inwardly tapered sidewall (218) extending upwardly therefrom, a second radius (220), and a third radius (222) with a substantially horizontally oriented step (50) extending between the second (220) and third radius (222);
wherein the first radius (224) and the third radius (222) comprise convex features, and the second radius (220) is provided between the first (224) and third radii (222); and
wherein the first radius (224) of a metallic cup (20) is operable to rest on a second radius (220) of a second metallic cup (20) such that at least one of the upper ends, and the lower ends of the metallic cups (20) are vertically spaced apart when the metallic cups (20) are stacked or nested,
wherein the first radius (224) and the second radius (220) each comprise a radius of between approximately 0,127 cm (0.050 inches) and 0,508 cm (0.20 inches) and
wherein the third radius (222) comprises a radius of between approximately 0,0762 cm (0.030 inches) and 0,508 cm (0.20 inches).

8. The tapered metallic cup (20) of claim 7, wherein the lower end of the cup comprises an annular standing surface (30) on a lower portion of the first radius (224), and wherein the domed portion (24) is provided within the annular standing surface (30).

9. The tapered metallic cup (20) of claim 7, wherein the second radius (220) comprises a concave feature.

10. The tapered metallic cup (20) of claim 7, wherein the height is between approximately 10,16 cm (4.0 inches) and approximately 17,78 cm (7.0 inches).

11. The tapered metallic cup (20) of claim 7, wherein the cup comprises at least three tapered sections (214).

12. The tapered metallic cup (20) of claim 7, wherein a maximum inner diameter of the cup comprises a diameter of at least approximately 7,62 cm (3.0 inches).

13. The tapered metallic cup (20) of claim 7, wherein a minimum inner diameter of the cup comprises a diameter of not more than approximately 6,35 cm (2.50 inches).

## Patentansprüche

1. Verfahren zur Herstellung eines stapelbaren, konischen Metallbechers (20), wobei das Verfahren umfasst:
Bereitstellen eines Vorratsmaterials;
Schneiden eines Rohlings aus dem Ausgangsmaterial;
Formen mindestens eines Bechers aus dem Rohling mit Hilfe eines Stanz- und Ziehverfahrens;
Durchführen eines Nachziehvorgangs an dem Becher, um den Becher mit einer vorbestimmten Höhe und Wandstärke zu versehen;
Beschneiden des Bechers auf eine zweite Höhe nach dem Nachziehen;
Einrollen des oberen Rands des beschnittenen Bechers, so dass eine Lippe entsteht;
Bilden gerader Wandabschnitte (10) im Becher durch Ziehen des Bechers;
Aufweiten jedes der geraden Wandabschnitte (10) unter Verwendung einer oder mehrerer Matrizen mit sich verjüngendem Profil;
Ausbilden einer Wölbung (24) in einem Boden des Bechers (20); und
Ausbilden eines Stapelmerkmals im Boden des Bechers (20) durch Bereitstellen einer Druckkraft auf den Boden des Bechers (20), so dass ein unterer Abschnitt des Bechers (20) eine nach innen gerichtete Verjüngung oder Neigung aufweist,
wobei das Stapelmerkmal einen ersten Radius (224), der benachbart zu einer Wölbung (24) am unteren Ende des sich verjüngenden Bechers (20) angeordnet ist, mit einer sich nach innen verjüngenden Seitenwand (218), die sich davon nach oben erstreckt, einen zweiten Radius (220) und einen dritten Radius (222) mit einer im Wesentlichen horizontal ausgerichteten Stufe, die sich zwischen dem zweiten (220) und dritten Radius (222) erstreckt, umfasst;
wobei der erste Radius (224) und der dritte Radius (222) konvexe Merkmale aufweisen, und der zweite Radius (220) zwischen dem ersten (224) und dem dritten Radius (222) vorgesehen ist; und
wobei der erste Radius (224) eines Metallbechers (20) bewirkt, dass er auf einem zweiten Radius (220) eines zweiten Metallbechers (20) ruht, so dass entweder wenigstens die oberen Enden oder die unteren Enden der Metallbecher (20) vertikal voneinander beabstandet sind, wenn die Metallbecher (20) gestapelt oder verschachtelt sind,
wobei der erste Radius (224) und der zweite Radius (220) jeweils einen Radius zwischen etwa 0,127 cm (0,050 Zoll) und 0,508 cm (0,20 Zoll) aufweisen und
wobei der dritte Radius (222) einen Radius zwischen etwa 0,0762 cm (0,030 Zoll) und 0,508 cm (0,20 Zoll) aufweist.

2. Verfahren nach Anspruch 1, wobei das Ausgangsmaterial eine Aluminiumspule umfasst und der Schritt des Formens mindestens eines Bechers umfasst, dass mindestens ein Teil der Aluminiumspule dem Rohlings- und Ziehvorgang unterzogen wird.

3. Verfahren nach Anspruch 1 ferner umfassend das Dekorieren oder Beschichten mindestens einer Innen- oder Außenfläche des Metallbechers (20).

4. Verfahren nach Anspruch 1, wobei der Schritt des Einrollens der Oberkante vor dem Schritt des Bildens eines oder mehrerer gerader Wandabschnitte (218) erfolgt.

5. Verfahren nach Anspruch 1, wobei das Ausgangsmaterial ein vorbeschichtetes Aluminiumblech umfasst, wodurch die Notwendigkeit zusätzlicher Wasch- und Beschichtungsschritte bei der Herstellung des Bechers verringert wird.

6. Verfahren nach Anspruch 1, wobei das Ausbilden eines Stapelmerkmals im Boden des Bechers durch Bereitstellen einer Druckkraft auf den Boden des Bechers unter Verwendung eines Werkzeugpakets (250) durchgeführt wird, das einen zentralen Stempel (252) mit einem Hohlraum (253) zur Aufnahme eines gewölbten Bodenabschnitts (24) eines Bechers und ein Nachziehdruckpad (254) umfasst, einen Nachziehstempel (256) und ein Umformwerkzeug (260) umfasst, wobei während des Formens das Umformwerkzeug (260) bewegt wird, um den unteren Abschnitt des Bechers (262) zu berühren, wobei ein konkaver Hohlraum (266), der in dem Umformwerkzeug (260) vorgesehen ist und den unteren Abschnitt des Bechers (262) außerhalb eines gewölbten Bereichs (24) des Bechers (262) berührt und den Bodenabschnitt ausdehnt.

7. Ein konischer Metallbecher (20) mit einem geometrischen Profil, das geeignet ist, das Stapeln mit einem zweiten Metallbecher (20) zu ermöglichen, umfassend:
ein oberes Ende und ein unteres Ende und eine Höhe, die sich zwischen dem oberen und dem unteren Ende erstreckt;
eine Vielzahl von verjüngten Abschnitten (214), die zwischen dem oberen Ende und dem unteren Ende vorgesehen sind; und
wobei jeder der verjüngten Abschnitte (214) eine im Wesentlichen konstante Wandstärke und ein verjüngtes Profil aufweist;
wobei benachbarte verjüngte Abschnitte (214) der mehreren verjüngten Abschnitte (214) nacheinander kleinere Durchmesser aufweisen; und
das untere Ende des Bechers (20) ein Stapelmerkmal mit einer Vielzahl von Biegepunkten aufweist, wobei das Stapelmerkmal einen ersten Radius (224), der benachbart zu einer Kuppel (24) am unteren Ende des sich verjüngenden Bechers (20) angeordnet ist, mit einer sich nach innen verjüngenden Seitenwand (218), die sich davon nach oben erstreckt, einen zweiten Radius (220) und einen dritten Radius (222) mit einer im Wesentlichen horizontal ausgerichteten Stufe (50) aufweist, die sich zwischen dem zweiten (220) und dritten Radius (222) erstreckt;
wobei der erste Radius (224) und der dritte Radius (222) konvexe Merkmale aufweisen, und der zweite Radius (220) zwischen dem ersten (224) und dem dritten Radius (222) vorgesehen ist; und
wobei der erste Radius (224) eines Metallbechers (20) so betätigbar ist, dass er auf einem zweiten Radius (220) eines zweiten Metallbechers (20) ruht, so dass mindestens eines der oberen Enden und die unteren Enden der Metallbecher (20) vertikal voneinander beabstandet sind, wenn die Metallbecher (20) gestapelt oder verschachtelt sind,
wobei der erste Radius (224) und der zweite Radius (220) jeweils einen Radius zwischen etwa 0,127 cm (0,050 Zoll) und 0,508 cm (0,20 Zoll) aufweisen und
wobei der dritte Radius (222) einen Radius zwischen etwa 0,0762 cm (0,030 Zoll) und 0,508 cm (0,20 Zoll) aufweist.

8. Konischer Metallbecher (20) nach Anspruch 7, wobei das untere Ende des Bechers eine ringförmige Standfläche (30) an einem unteren Abschnitt des ersten Radius (224) aufweist und wobei der gewölbte Abschnitt (24) innerhalb der ringförmigen Standfläche (30) vorgesehen ist.

9. Der konische Metallbecher (20) nach Anspruch 7, wobei der zweite Radius (220) ein konkaves Merkmal aufweist.

10. Der konische Metallbecher (20) nach Anspruch 7, wobei die Höhe zwischen etwa 10,16 cm (4,0 Zoll) und etwa 17,78 cm (7,0 Zoll) liegt.

11. Der konische Metallbecher (20) nach Anspruch 7, wobei der Becher mindestens drei konische Abschnitte (214) umfasst.

12. Konisch zulaufender Metallbecher (20) nach Anspruch 7, wobei der maximale Innendurchmesser des Bechers einen Durchmesser von mindestens etwa 7,62 cm (3,0 Zoll) aufweist.

13. Konischer Metallbecher (20) nach Anspruch 7, wobei der Mindestinnendurchmesser des Bechers einen Durchmesser von nicht mehr als etwa 6,35 cm (2,50 Zoll) aufweist.

## Revendications

1. Un procédé de formation d'une coupelle (20) métallique évasée empilable, le procédé comprenant :
se procurer une masse de matériau ;
couper une ébauche dans la masse de matériau ;
former au moins une coupelle à partir de l'ébauche en utilisant une opération de formage et d'étirage ;
effectuer une opération de réétirage sur la coupelle pour donner à la coupelle une hauteur et une épaisseur de paroi déterminées à l'avance ;
à la suite de l'opération de réétirage, finir la coupelle en la mettant à une deuxième hauteur ;
rouler le bord supérieur de la coupelle finie pour former une lèvre ;
former des parties (10) de paroi rectilignes dans la coupelle en étirant la coupelle ;
expanser chacune des parties (10) de paroi rectilignes en utilisant un ou plusieurs moules ayant un profil évasé ;
former un dôme (24) dans un fond de la coupelle (20) ; et
former une caractéristiques d'empilage dans le fond de la coupelle (20) en appliquant une force de compression au fond de la coupelle (20) de manière à ce qu'une partie inférieure de la coupelle (20) comprenne un cône d'entrée ou une pente vers l'intérieur,
dans lequel la caractéristique d'empilage comprend un premier rayon (224) en une position contiguë à un dôme (24) à l'extrémité inférieure de la coupelle (20) évasée avec une paroi (218) latérale évasée vers l'intérieur s'en étendant vers le haut, un deuxième rayon (220) et un troisième rayon (222) avec un gradin orienté sensiblement horizontalement s'étendant entre le deuxième (220) et le troisième rayon (222) ;
dans lequel le premier rayon (224) et le troisième rayon (222) comprennent des caractéristiques convexes, et le deuxième rayon (220) est ménagé entre les premier (224) et troisième rayons (222) ; et
dans lequel le premier rayon (224) d'une coupelle (20) métallique peut fonctionner pour reposer sur un deuxième rayon (220) d'une deuxième coupelle (20) métallique de manière à ce qu'au moins l'une des extrémités supérieures et les extrémités inférieures des coupelles (20) métalliques soient à distance verticalement, lorsque les coupelles (20) métalliques sont empilées ou emboîtées,
dans lequel le premier rayon (224) et le deuxième rayon (220) comprennent chacun un rayon compris entre environ 0,127 cm (0,050 pouce) et 0,508 cm (0,20 pouce), et
dans lequel le troisième rayon (222) comprend un rayon compris entre 0,0762 cm (0,030 pouce) et 0,508 cm (0,20 pouce).

2. Le procédé de la revendication 1, dans lequel la masse de matériau comprend une bobine d'aluminium et le stade de formage d'au moins une coupelle comprend soumettre au moins une partie de la bobine d'aluminium à l'opération de formage et d'étirage.

3. Le procédé de la revendication 1, comprenant en outre décorer ou revêtir au moins l'une d'une surface intérieure et d'une surface extérieure de la coupelle (20) métallique.

4. Le procédé de la revendication 1, dans lequel le stade de roulage du bord supérieur a lieu avant le stade de formage d'une ou de plusieurs parties (218) de paroi rectilignes.

5. Le procédé de la revendication 1, dans lequel la masse de matériau comprend une tôle d'aluminium pré-revêtue en réduisant ainsi le besoin de stades supplémentaires de lavage et de revêtement dans la formation de la coupelle.

6. Le procédé de la revendication 1, dans lequel former une caractéristique d'empilage dans le fond de la coupelle en appliquant une force de compression au fond de la coupelle est effectué en utilisant un pack (250) d'outil, qui comprend un poinçon (252) central de moule ayant un vide (253) pour recevoir une partie (24) de fond en dôme d'une coupelle et un tampon (254) de pression de réétirage, un moule (256) de réétirage et un outil (260) de reformage, dans lequel pendant le formage, l'outil (260) de reformage est déplacé pour venir en contact avec la partie de fond de la coupelle (262) où un vide (266) concave prévu dans l'outil (260) de reformage contacte la partie de fond de la coupelle (262) extérieure à une zone en dôme (24) de la coupelle (262) et élargit la partie de fond.

7. Une coupelle (20) métallique évasée ayant un profil géométrique propre à permettre de l'empiler avec une deuxième coupelle (20) métallique, comprenant :
une extrémité supérieure et une extrémité inférieure, et une hauteur s'étendant entre l'extrémité supérieure et l'extrémité inférieure ;
une pluralité de parties (214) évasées entre l'extrémité supérieure et l'extrémité inférieure ; et
dans laquelle chacune des parties (214) évasées comprend une épaisseur de paroi sensiblement constante et un profil évasé ;
dans laquelle des parties (214) évasées voisines de la pluralité de parties (214) évasées comprennent des diamètres successivement plus petits ; et
l'extrémité inférieure de la coupelle (20) comprenant une caractéristique d'empilage ayant une pluralité de points d'inflexion, la caractéristique d'empilage comprenant un premier rayon (224) en position contiguë à un dôme (24) à l'extrémité inférieure de la coupelle (20) évasée avec une paroi (218) latérale évasée vers l'intérieur s'en étendant vers le haut, un deuxième rayon (220) et un troisième rayon (222) avec un gradin (50) orienté sensiblement horizontalement entre le deuxième (220) et le troisième rayon (222) ;
dans laquelle le premier rayon (224) et le troisième rayon (222) comprennent des caractéristiques convexes, et le deuxième rayon (220) est ménagé entre les premier (224) et troisième rayons (222) ; et
dans laquelle le premier rayon (224) d'une coupelle (20) métallique peut fonctionner pour reposer sur un deuxième rayon (220) d'une deuxième coupelle (20) métallique de manière à ce qu'au moins l'une des extrémités supérieures et les extrémités inférieures des coupelles (20) métalliques soient à distance verticalement, lorsque les coupelles (20) métalliques sont empilées ou emboîtées,
dans laquelle le premier rayon (224) et le deuxième rayon (220) comprennent chacun un rayon compris entre environ 0,127 cm (0,050 pouce) et 0,508 cm (0,20 pouce), et
dans laquelle le troisième rayon (222) comprend un rayon compris entre 0,0762 cm (0,030 pouce) et 0,508 cm (0,20 pouce).

8. La coupelle (20) métallique évasée de la revendication 7, dans laquelle l'extrémité inférieure de la coupelle comprend une surface (30) annulaire debout sur une partie inférieure du premier rayon (224), et dans lequel la partie (24) en dôme est prévue dans la surface (30) annulaire debout.

9. La coupelle (20) métallique évasée de la revendication 7, dans laquelle le deuxième rayon (220) comprend une caractéristique concave.

10. La coupelle (20) métallique évasée de la revendication 7, dans laquelle la hauteur est comprise entre environ 10,16 cm (4,0 pouce) et à environ 17,78 cm (7,0 pouce).

11. La coupelle (20) métallique évasée de la revendication 7, dans laquelle la coupelle comprend au moins trois parties (214) évasées.

12. La coupelle (20) métallique évasée de la revendication 7, dans laquelle un diamètre intérieur maximum de la coupelle comprend un diamètre d'au moins environ 7,62 cm (3,0 pouce).

13. La coupelle (20) métallique évasée de la revendication 7, dans laquelle un diamètre intérieur minimum de la coupelle comprend un diamètre de pas plus d'environ 6,35 cm (2,50 pouce).
